# FASCICULE DE BREVET EUROPEEN

(11) **EP 3 223 588 B1**
(45) Date de publication et mention de la délivrance du brevet: **08.04.2020**
(21) Numéro de dépôt: 17160626.2
(22) Date de dépôt: 13.03.2017
(51) Int. Cl.: H05B 33/08, B60Q 1/00

(54) **GESTION DE L'INFORMATION BIN DANS UN MODULE LUMINEUX POUR VÉHICULE AUTOMOBILE COMPRENANT DES SOURCES LUMINEUSES À ÉLÉMENT SEMI-CONDUCTEUR**
VERWALTUNG VON BIN-INFORMATION IN EINEM LED-MODUL FÜR KFZ
MANAGEMENT OF BIN INFORMATION IN AN LED MODULE FOR AUTOMOTIVE VEHICLE

(30) Priorité: 21.03.2016 FR 1652410
(43) Date de publication de la demande: 27.09.2017
(73) Titulaire: Valeo Iluminacion, 23600 Martos (ES)
(72) Inventeur: PENA, Miguel-Angel, 18260 Illora (ES); MARIN, Maria, 23600 Martos (ES); SANTAELLA, Juan-Jose, 18101 Belicena (ES); LARA-CABEZA, Juan, 23009 Jaen (ES); ILLAN, Antonio Domingo, 23600 Martos (ES)

(56) Documents cités:
- EP-B1- 2 154 933
- DE-A1- 10 230 154

## Description

L'invention a trait au domaine des projecteurs d'éclairage, notamment pour véhicule automobile. L'invention concerne en particulier un module lumineux pour un tel projecteur, le module étant équipé de sources lumineuses à élément semi-conducteur, dont la mise à disposition d'une information de BIN est nécessaire pour la configuration du projecteur.

Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. Entre autres, une LED est caractérisée par une valeur seuil d'intensité de courant. Ce courant direct (« forward current ») maximal est en général décroissant à température croissante. De même, lorsqu'une LED émet de la lumière, on observe à ses bornes une chute de tension égale à sa tension directe (« forward voltage »). Dans le domaine automobile, on a de plus en plus recours à la technologie LED pour diverses solutions de signalisation lumineuse. Les LEDs sont utilisées afin d'assurer des fonctions lumineuses telles que les feux diurnes, les feux de signalisation etc... Les composants LEDs issus d'un même procédé de production peuvent néanmoins présenter des caractéristiques (capacité d'émission, tension directe, ...) différentes. Afin de regrouper les composants ayant des caractéristiques semblables, les LEDs produites sont triés par groupes, appelés également BIN, chaque BIN regroupant des LEDs ayant des caractéristiques semblables.

Il est connu dans l'art d'utiliser un circuit de pilotage pour piloter l'alimentation d'un ensemble ou groupe de LEDs. Le circuit définit la tension appliquée à une branche montée en charge et comprenant le groupe de LEDs branchées en série. Dans le domaine des dispositifs lumineux pour véhicules automobiles, il est particulièrement important de pouvoir assurer une luminosité constante afin de garantir la sécurité des utilisateurs du véhicule et des acteurs du trafic routier. Afin de fournir une alimentation constante, des circuits de pilotage connus utilisent différents types de convertisseurs, DC/DC, linéaire, résistif, etc, ... pour convertir la tension continue fournie par exemple par une batterie de voiture en une tension continue de charge, dépendante du nombre de LEDs alimentées. Le courant électrique à fournir dépend également du BIN des LEDs à alimenter. C'est pourquoi il est, selon des procédés d'assemblages connus, nécessaire d'obtenir l'information de BIN qui correspond aux LEDs utilisées, pour programmer ou régler correctement le circuit de pilotage utilisé pour alimenter les LEDs en courant électrique. De manière connue, l'information de BIN est codée à l'aide d'une résistance d'une valeur prédéterminée, disposée sur le circuit imprimé qui supporte les LEDs en question, en isolation de la branche de charge qui regroupe les sources lumineuses. Le circuit de pilotage de l'alimentation de ces LEDs est connecté par des fils de connexion dédiés au circuit imprimé supportant les LEDs pour obtenir la valeur de la résistance en question, et pour en déduire l'information de BIN. Avec le nombre de fonctions lumineuses croissant implémentés par des LEDs, le nombre de câbles de connexion reliant le/les circuits de pilotage de l'alimentation aux circuits imprimés supportant les LEDs en question s'accroît donc rapidement dans le but de relayer les informations BIN de manière requise. Ceci engendre d'une part des coûts importants lors de la production de projecteurs pour véhicules automobiles, et d'autre part des contraintes de conception importantes, puisque l'espace limité dans lequel tous les modules d'un dispositif lumineux doivent être logés se voit restreint par ce câblage.

La publication DE10230154A1 montre un circuit selon le préambule de la revendication 1.

L'invention a pour objectif de pallier à au moins un des problèmes posés par l'art antérieur. Plus précisément, l'invention a pour objectif de proposer un module lumineux comprenant des sources lumineuses de type LED, qui réduit le câblage requis entre le module et son circuit de pilotage de l'alimentation électrique.

L'invention a pour objet un circuit électronique pour un module lumineux d'un véhicule automobile, le circuit comprenant deux bornes destinées à son alimentation en courant électrique, le circuit comprenant au moins une source lumineuse à élément semi-conducteur faisant partie d'une première branche de circuit, et un composant Rbin, faisant partie d'une deuxième branche de circuit, et présentant une résistance dont la valeur est représentative d'une propriété de l'au moins une source lumineuse. Le circuit électronique est remarquable en ce que le circuit électrique comprend un montage commutateur destiné à alimenter en électricité ladite deuxième branche en dépendance de l'intensité du courant électrique fourni au circuit électrique.

Le montage commutateur peut de préférence être configuré de manière à ce que la deuxième branche soit alimentée de manière exclusive lorsqu'un courant électrique d'une intensité inférieure à une première valeur seuil prédéterminée passe à travers le circuit.

De préférence, l'alimentation exclusive de la deuxième branche est satisfaite lorsque la totalité ou la quasi-totalité du courant électrique fourni au circuit électronique traverse la deuxième branche.

De préférence, le montage commutation est configuré de manière à ce la première branche soit alimentée, notamment de manière exclusive, lorsqu'un courant électrique d'une intensité supérieure à une deuxième valeur seuil prédéterminée est appliqué au circuit électronique, la deuxième valeur seuil étant supérieure ou égale à la première valeur seuil.

La première valeur seuil peut de manière préférée être inférieure à 10 mA, de préférence inférieure à 5 mA. Par exemple, la première valeur seuil peut être de 1 mA.

La première branche de circuit peut de préférence être montée en parallèle avec la deuxième branche de circuit.

Alternativement, la première branche de circuit peut être montée en série avec la deuxième branche de circuit.

Le montage commutateur peut de préférence comprendre un circuit réalisant une fonction logique NON, dont la sortie commande un élément commutateur, l'alimentation de la deuxième branche de circuit dépendant de l'état dudit élément commutateur.

De préférence, le circuit réalisant la fonction logique NON peut comprendre un inverseur CMOS (« complementary metal-oxide semiconductor »).

L'élément commutateur peut de préférence comprendre un transistor. Il peut par exemple s'agir d'un transistor de type à effet de champ à grille métal-oxyde, MOSFET.

La source lumineuse peut préférentiellement comprendre une diode électroluminescente, LED, une diode électroluminescente organique, OLED, ou une diode Laser.

La valeur de la résistance Rbin peut de préférence être représentative d'une valeur BIN des sources lumineuses du circuit.

L'invention a également pour objet un module lumineux pour un véhicule automobile, comprenant des moyens de pilotage de l'alimentation électrique d'au moins une source lumineuse à élément semi-conducteur. Le module lumineux est remarquable en ce qu'il comprend un circuit électronique conforme à l'invention, abritant ladite source lumineuse.

L'invention a également pour objet un procédé de pilotage de l'alimentation électrique dans un module lumineux conforme à l'invention. Le procédé est remarquable en ce qu'il comprend les étapes suivantes :
a) alimentation du circuit électronique à l'aide d'un courant électrique d'une première intensité, inférieur à une valeur seuil prédéterminée ;
b) mesure de la chute de tension lors de l'étape (a) ;
c) ensuite, alimentation du circuit électronique à l'aide d'un courant électrique d'une deuxième intensité, la deuxième intensité étant dépendante de la chute de tension mesurée à l'étape (b).

De préférence, la première étape a une durée inférieure à 20 ms, et de préférence inférieure à 10 ms.

En utilisant les mesures proposées par la présente invention, il devient possible de réduire le câblage entre un dispositif de pilotage de l'alimentation électrique de sources lumineuses, et un circuit imprimé abritant lesdites sources lumineuses, par rapport à des techniques connues dans l'art. De manière connue, un premier câblage est nécessaire pour garantir l'alimentation des sources lumineuses, et un deuxième câblage dédié est nécessaire pour récupérer l'information BIN des sources lumineuses, qui sont par exemple des diodes électroluminescentes, LEDs. En effet cette information BIN est nécessaire pour piloter l'alimentation des LEDs de manière adéquate. Selon l'invention, ce deuxième câblage dédié devient superflu et peut être éliminé, puisque l'information BIN peut être récupérée par le dispositif de pilotage de l'alimentation électrique en fonction de l'intensité du courant électrique injecté par le dispositif en direction du circuit électronique selon l'invention, moyennant l'unique câblage destiné à l'alimentation des LEDs compris dans ce circuit. La réduction de câblage est particulièrement importante dans le cadre de la conception de feux de véhicules automobiles, ou un dispositif de pilotage peut être amené à alimenter plusieurs fonctions lumineuses du véhicule, impliquant autant d'informations BIN à récupérer. La réduction du câblage réduit le coût de production et réduit également les soucis de conception liés à la compatibilité électromagnétique d'un module lumineux.

D'autres caractéristiques et avantages de la présente invention seront mieux compris à l'aide de la description exemplaire et des dessins parmi lesquels :
- la figure 1 représente une illustration schématique d'un module lumineux non couvert par l'invention, y compris un circuit électronique selon un mode de réalisation non couvert par l'invention ;
- la figure 2 représente un circuit électronique non couvert par l'invention dans un mode de réalisation non couvert par l'invention ;
- la figure 3 représente un circuit électronique selon l'invention dans un mode de réalisation préféré.

Sauf indication spécifique du contraire, des caractéristiques techniques décrites en détail pour un mode de réalisation donné peuvent être combinés aux caractéristiques techniques décrites dans le contexte d'autres modes de réalisation décrits à titre exemplaire et non limitatif. Des numéros de référence similaires seront utilisés pour décrire des concepts semblables à travers différents modes de réalisation de l'invention. Par exemple, les références, 100, 200 et 300 désignent un circuit électronique selon l'invention, dans trois modes de réalisation décrits.

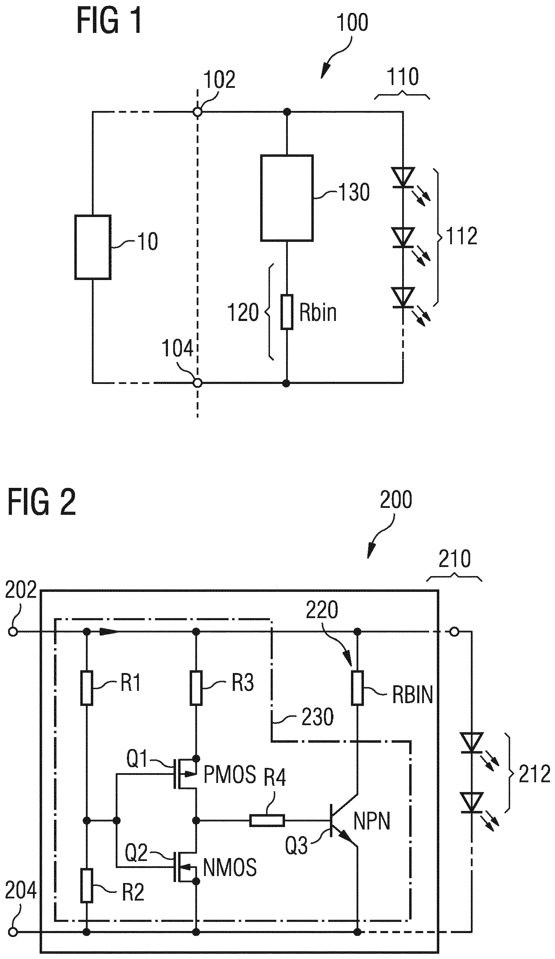

La figure 1 donne une illustration d'un mode de réalisation non couvert par l'invention. Un circuit électronique 100 comprend deux bornes de connexion 102, 104, destinées à relier le circuit électronique à des moyens d'alimentation électrique 10. Le circuit comprend au moins une première branche abritant des sources lumineuses 112 montées en série. A titre exemplaire et non limitatif, il peut s'agir de diodes électroluminescentes, LEDs.

Dans le cadre d'un circuit électronique 100 pour un module lumineux d'un véhicule automobile, les moyens d'alimentation électrique 10 peuvent comprendre un circuit électronique ou un élément microcontrôleur implémentant la fonction de pilotage de l'alimentation des LEDs. De tels circuits et/ou éléments microcontrôleurs sont en soi connus dans l'art et ne seront pas décrit en détails dans le cadre de la présente invention.

Le circuit électronique 100 comprend une deuxième branche 120 comprenant un composant résisitf, par exemple une résistance Rbin. La valeur de la résistance Rbin encode ou représente une propriété de la ou des sources lumineuses 112. Il s'agit par exemple de l'information BIN identifiant les LEDs. Cette information permet notamment la configuration des moyens d'alimentation électrique, puisque l'intensité du courant direct à fournir aux LEDs est spécifié par l'information BIN. Lorsqu'un courant d'une intensité prédéterminée traverse la résistance Rbin, la chute de tension aux bornes de celle-ci peut être mesurée. A partir de cette mesure, la valeur de la résistance peut être déduite et comparée à un ensemble de valeurs prédéterminées. Toutes les valeurs prédéterminées sont mises en relation avec des informations BIN et des tensions directes correspondantes. Une mesure de chute de tension aux bornes de la résistance Rbin permet donc l'identification des informations BIN et de la tension directe y associées. Ainsi, la lecture de la chute de tension aux bornes de Rbin donne accès à l'information BIN et permet la configuration correcte des moyens d'alimentation électrique. Les valeurs prédéterminées de la résistance Rbin ainsi que les informations BIN et les valeurs de courant direct y associées sont de préférence pré-enregistrées par programmation dans l'élément microcontrôleur qui réalise les moyens d'alimentation électrique 10. Alternativement, ces données sont enregistrées dans un élément de mémoire auquel les moyens d'alimentation électrique ont un accès en lecture.

Un montage commutateur 130 est destiné à alimenter en électricité ladite deuxième branche 120 comprenant la résistance Rbin en dépendance de l'intensité du courant électrique fourni au circuit électrique par les moyens d'alimentation électrique.

Le circuit électronique 100 permet d'obtenir l'information Rbin de la manière suivante. Lors d'une première étape, les moyens d'alimentation électrique 10 injectent un courant électrique d'une première intensité prédéterminée, appelé courant d'échantillonnage, dans le circuit électronique. La première intensité de courant est inférieure à une valeur seuil prédéterminé. Elle peut par exemple être inférieure à 10, 5 ou 1 mA. La première intensité est nettement inférieure à l'intensité du courant direct de LEDs usuelles. Le montage de commutation 130 est configuré de manière à ce que la deuxième branche 120 du circuit électrique soit alimentée en électricité lorsqu'un courant ayant la première intensité prédéterminée est injecté dans le circuit électronique 100. Alors que le courant d'échantillonnage passe par la résistance Rbin, les moyens d'alimentation électrique 10 mesurent la chute de tension aux bornes de cette résistance. La chute de tension ainsi mesurée permet de déduire la valeur BIN en utilisant les paramètres pré-enregistrés.

La valeur BIN ainsi récupérée permet de aux moyens d'alimentation électrique 10 de sélectionner une intensité de courant direct à fournir au circuit électronique 100, afin d'alimenter les sources lumineuses 112 de la première branche de circuit. Lors d'une deuxième étape, les moyens d'alimentation électrique fournissent un courant ayant au moins l'intensité du courant direct ainsi identifié au circuit électronique 100. Comme l'intensité courant électrique traversant le circuit électronique 100 lors de cette étape est supérieur à la valeur seuil, le montage commutateur exclut la deuxième branche de circuit comprenant la résistance Rbin du circuit alimenté. Comme l'intensité du courant électrique traversant le circuit électronique 100 correspond au moins au courant direct des sources lumineuses 112, celles-ci sont alimentées de manière adéquate.

L'étape d'injection du courant d'échantillonnage peut de préférence être d'une durée inférieure à 20, 10 ou 5 ms, et elle peut de préférence être répétée de manière périodique, ou à chaque fois que la fonction lumineuse réalisée par les sources lumineuses 112 est mise en marche.

Dans un mode de réalisation non couvert par l'invention illustré à la figure 2, le circuit électronique 200 comprend deux bornes de connexion 202, 204, destinées à relier le circuit électronique à des moyens d'alimentation électrique non-illustrés. Le circuit comprend une première branche 210 abritant des sources lumineuses 212 montées en série. Une deuxième branche de circuit 220 comprenant une résistance Rbin. Les deux branches 210, 220 sont montées en parallèle et la valeur de la résistance Rbin encode l'information BIN identifiant les LEDs 212. Le montage commutateur 230 est destiné à alimenter en électricité ladite deuxième branche 220 comprenant la résistance Rbin en dépendance de l'intensité du courant électrique fourni au circuit électrique par les moyens d'alimentation électrique. Le montage commutateur 230 est réalisé par un circuit inverseur CMOS, réalisant la fonction logique NON, dont la sortie commande l'état d'un élément commutateur illustré à l'aide d'un transistor Q3. Lorsque le courant d'échantillonnage est injecté dans le circuit électronique 200, le transistor Q1 est fermé, ce qui implique que le transistor Q3 est également fermé et que le courant d'échantillonnage traverse la résistance Rbin. Lorsque lors d'une deuxième phase, un courant d'une intensité plus élevée est injecté dans le circuit électronique 200, ceci cause l'apparition d'une tension plus élevée aux bornes de l'inverseur CMOS. En conséquence, le transistor Q2 est fermé alors que le transistor Q1 s'ouvre. Donc, le transistor Q3 est également ouvert et le courant électrique ne traverse pas la résistance Rbin. Lorsque le courant électrique est supérieur au courant direct des LEDs 212, uniquement celles-ci sont alimentées et il n'y a pas de pertes au niveau de la résistance Rbin. De préférence, les valeurs résistances R1 et R2 sont élevées, de manière à minimiser autant que possible leur consommation de courant électrique.

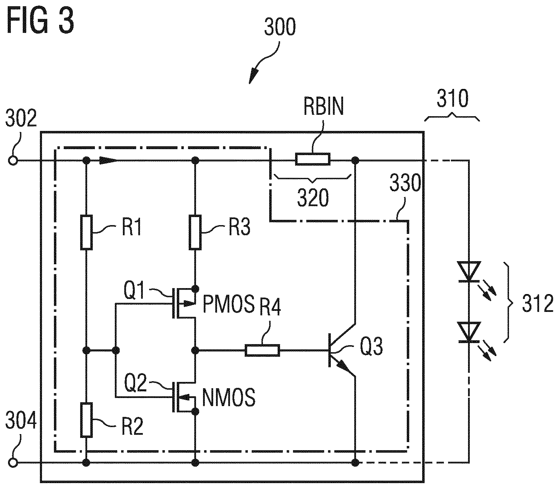

La figure 3 illustre un mode de réalisation couvert part l'invention dans lequel le circuit électronique 300 comprend deux bornes de connexion 302, 304, destinées à relier le circuit électronique à des moyens d'alimentation électrique non-illustrés. Le circuit comprend une première branche 310 abritant des sources lumineuses 312 montées en série. Une deuxième branche de circuit 320 comprenant une résistance Rbin. Dans ce mode de réalisation, les deux branches 310, 320 sont montées en série et la valeur de la résistance Rbin encode l'information BIN identifiant les LEDs 312. A titre exemplaire, le montage commutateur 330 illustré est également réalisé par un inverseur CMOS.

Il va de soi que le dimensionnement des composants électriques et de la valeur seuil du courant dépend de l'application visée. L'homme du métier saura, sur base de la description donnée, adapter les composants décrits pour adapter le circuit électronique selon l'invention à des besoins d'applications spécifiques. De telles modifications restent pour autant dans le cadre de l'invention.

Il sera apprécié que le principe de stockage d'informations relatives aux composants du circuit électronique 100, 200, 300 dans une résistance intégrée au circuit électronique puisse être étendu à d'autres composants que les sources lumineuses, ou à des informations autres que l'information BIN, en utilisant les principes de l'invention qui viennent d'être décrits.

## Revendications

1. Circuit électronique (300) pour un module lumineux d'un véhicule automobile, le circuit électronique comprenant deux bornes (302,304) destinées à son alimentation en courant électrique, le circuit comprenant au moins une source lumineuse (312) à élément semi-conducteur faisant partie d'une première branche de circuit (310), et un composant Rbin, faisant partie d'une deuxième branche de circuit (320), et présentant une résistance dont la valeur est représentative d'une propriété de l'au moins une source lumineuse,
le circuit électronique comprenant un montage commutateur (330) destiné à alimenter en électricité ladite première branche (310) en dépendance de l'intensité du courant électrique fourni au circuit électronique **caractérisé en ce que** la première branche de circuit (310) est montée en série avec la deuxième branche de circuit (320).

2. Circuit électronique selon la revendication 1, **caractérisé en ce que** le montage (330) commutateur est configuré de manière à ce que la deuxième branche (320) soit alimentée de manière exclusive lorsqu'un courant électrique d'une intensité inférieure à une première valeur seuil prédéterminée passe à travers le circuit.

3. Circuit électronique selon une des revendications 1 ou 2, **caractérisé en ce que** la première valeur seuil est inférieure à 10 mA, de préférence inférieure à 5 mA.

4. Circuit électronique selon une des revendications 1 à 3, **caractérisé en ce que** le montage commutateur (330) comprend un circuit réalisant une fonction logique NON, dont la sortie commande un élément commutateur (Q3), l'alimentation de la première branche de circuit (310) dépendant de l'état dudit élément commutateur (Q3).

5. Circuit électronique selon la revendication 4, **caractérisé en ce que** le circuit réalisant la fonction logique NON comprend un inverseur CMOS (« complementary metal-oxide semiconductor »).

6. Circuit électronique selon une des revendications 4 ou 5, **caractérisé en ce que** l'élément commutateur (Q3) comprend un transistor.

7. Circuit électronique selon une des revendications 1 à 6, **caractérisé en ce que** la source lumineuse comprend une diode électroluminescente, LED, une diode électroluminescente organique, OLED, ou une diode Laser.

8. Circuit électronique selon une des revendications 1 à 7, **caractérisé en ce que** la valeur de la résistance Rbin est représentative d'une valeur BIN des sources lumineuses du circuit.

9. Module lumineux pour un véhicule automobile, comprenant des moyens de pilotage de l'alimentation électrique (10) d'au moins une source lumineuse à élément semi-conducteur (112), **caractérisé en ce que** le module comprend un circuit électronique (100) selon une des revendications 1 à 8 abritant ladite source lumineuse (112).

10. Procédé de pilotage de l'alimentation électrique dans un module lumineux selon la revendication 9, **caractérisé en ce que** le procédé comprend les étapes suivantes :
a) alimentation du circuit électronique à l'aide d'un courant électrique d'une première intensité, inférieur à une valeur seuil prédéterminée ;
b) mesure de la chute de tension lors de l'étape (a) ;
c) ensuite, alimentation du circuit électronique à l'aide d'un courant électrique d'une deuxième intensité, la deuxième intensité étant dépendante de la chute de tension mesurée à l'étape (b).

11. Procédé selon la revendication 10, **caractérisé en ce que** la première étape a une durée inférieure à 20 ms, et de préférence inférieure à 10 ms.

## Patentansprüche

1. Elektronische Schaltung (300) für ein Lichtmodul eines Kraftfahrzeugs, wobei die elektronische Schaltung zwei Anschlüsse (302, 304) umfasst, die für ihre Versorgung mit elektrischem Strom bestimmt sind, wobei die Schaltung mindestens eine Lichtquelle (312) mit einem Halbleiterelement umfasst, die einen Teil eines ersten Zweigs (310) der Schaltung bildet, und eine Rbin-Komponente, die einen Teil eines zweites Zweigs (320) der Schaltung bildet, und einen Widerstand aufweist, dessen Wert für eine Eigenschaft der mindestens einen Lichtquelle repräsentativ ist,
wobei die elektronische Schaltung eine Schalteranordnung (330) umfasst, die dazu bestimmt ist, den ersten Zweig (310) mit Elektrizität in Abhängigkeit von der Intensität des elektrischen Stroms zu versorgen, der an die elektronische Schaltung geliefert wird,
**dadurch gekennzeichnet, dass** der erste Zweig (310) der Schaltung in Serie mit dem zweiten Zweig (320) der Schaltung montiert ist.

2. Elektronische Schaltung nach Anspruch 1, **dadurch gekennzeichnet, dass** die Schalteranordnung (330) derart ausgelegt ist, dass der zweite Zweig (320) exklusiv versorgt wird, wenn ein elektrischer Strom mit einer Intensität, die kleiner ist als ein erster vorherbestimmter Schwellenwert, quer durch die Schaltung hindurchgeht.

3. Elektronische Schaltung nach einem der Ansprüche 1 oder 2, **dadurch gekennzeichnet, dass** der erste Schwellenwert kleiner ist als 10 mA, vorzugsweise kleiner als 5 mA.

4. Elektronische Schaltung nach einem der Ansprüche 1 bis 3, **dadurch gekennzeichnet, dass** die Schalteranordnung (330) eine Schaltung umfasst, die eine logische Funktion NEIN durchführt, deren Ausgang ein Schalterelement (Q3) steuert, wobei die Versorgung des ersten Zweigs (310) der Schaltung von dem Zustand des Schalterelements (Q3) abhängig ist.

5. Elektronische Schaltung nach Anspruch 4, **dadurch gekennzeichnet, dass** die Schaltung, welche die logische Funktion NEIN durchführt, einen CMOS("complementary metal-oxide semiconductor")-Inverter umfasst.

6. Elektronische Schaltung nach einem der Ansprüche 4 oder 5, **dadurch gekennzeichnet, dass** das Schalterelement (Q3) einen Transistor umfasst.

7. Elektronische Schaltung nach einem der Ansprüche 1 bis 6, **dadurch gekennzeichnet, dass** die Lichtquelle eine Elektrolumineszenzdiode, LED, eine organische Elektrolumineszenzdiode, OLED, oder eine Laserdiode umfasst.

8. Elektronische Schaltung nach einem der Ansprüche 1 bis 7, **dadurch gekennzeichnet, dass** der Widerstandswert Rbin für einen BIN-Wert der Lichtquellen der Schaltung repräsentativ ist.

9. Lichtmodul für ein Kraftfahrzeug, umfassend Mittel (10) zum Steuern der elektrischen Versorgung mindestens einer Lichtquelle (112) mit einem Halbleiterelement, **dadurch gekennzeichnet, dass** das Modul eine elektronische Schaltung (100) nach einem der Ansprüche 1 bis 8 umfasst, welche die Lichtquelle (112) steuert.

10. Verfahren zur Steuerung der elektrischen Versorgung in einem Lichtmodul nach Anspruch 9, **dadurch gekennzeichnet, dass** das Verfahren die folgenden Schritte umfasst:
a) Versorgung der elektronischen Schaltung mit Hilfe eines elektrischen Stroms mit einer ersten Intensität, die kleiner ist als ein vorherbestimmter Schwellenwert;
b) Messung des Spannungsabfalls bei dem Schritt (a) ;
c) anschließend Versorgung der elektronischen Schaltung mit Hilfe eines elektrischen Stroms mit einer zweiten Intensität, wobei die zweite Intensität von dem Spannungsabfall abhängig ist, der in dem Schritt (b) gemessen wird.

11. Verfahren nach Anspruch 10, **dadurch gekennzeichnet, dass** der erste Schritt eine Dauer hat, die kleiner ist als 20 ms, und vorzugsweise kleiner als 10 ms.

## Claims

1. Electronic circuit (300) for a luminous module of a motor vehicle, the electronic circuit comprising two terminals (302, 304) that are intended for the supply of electric current to the circuit, the circuit comprising at least one semiconductor-component light source (312) forming part of a first circuit branch (310), and a component Rbin, forming part of a second circuit branch (320), and comprising a resistor, the resistance of which is representative of a property of at least one light source,
the electronic circuit comprising a switching unit (330) that is intended to supply said first branch (310) with electricity depending on the magnitude of the electric current delivered to the electronic circuit,
**characterized in that** the first circuit branch (310) is mounted in series with the second circuit branch (320).

2. Electronic circuit according to Claim 1, **characterized in that** the switching unit (330) is configured so that the second branch (320) is supplied exclusively when an electric current of a magnitude lower than a first preset threshold value is passing through the circuit.

3. Electronic circuit according to either of Claims 1 and 2, **characterized in that** the first threshold value is lower than 10 mA, and preferably lower than 5 mA.

4. Electronic circuit according to one of Claims 1 to 3, **characterized in that** the switching unit (330) comprises a circuit providing a NOT logic function the output of which controls a switching component (Q3), the supply of the first circuit branch (310) depending on the state of said switching component (Q3).

5. Electronic circuit according to Claim 4, **characterized in that** the circuit providing the NOT logic function comprises a complementary metal-oxide semiconductor (CMOS) inverter.

6. Electronic circuit according to either of Claims 4 and 5, **characterized in that** the switching component (Q3) comprises a transistor.

7. Electronic circuit according to one of Claims 1 to 6, **characterized in that** the light source comprises a light-emitting diode (LED), an organic light-emitting diode (OLED), or a laser diode.

8. Electronic circuit according to one of Claims 1 to 7, **characterized in that** the resistance of the resistor Rbin is representative of a bin value of the light sources of the circuit.

9. Luminous module for a motor vehicle, comprising means for controlling the electrical supply (10) of at least one semiconductor-component light source (112), **characterized in that** the module comprises an electronic circuit (100) according to one of Claims 1 to 8 containing said light source (112).

10. Method for controlling the electrical supply in a luminous module according to Claim 9, **characterized in that** the method comprises the following steps:
a) supplying the electronic circuit using an electric current of a first magnitude lower than a preset threshold value;
b) measuring the voltage drop in step (a);
c) then, supplying the electronic circuit using an electric current of a second magnitude, the second magnitude being dependent on the voltage drop measured in step (b).

11. Method according to Claim 10, **characterized in that** the first step has a duration shorter than 20 ms, and preferably shorter than 10 ms.
